# EUROPEAN PATENT APPLICATION

(11) **EP 1 296 135 A1**
(43) Date of publication of application: **26.03.2003**
(21) Application number: 02020519.1
(22) Date of filing: 13.09.2002
(51) Int. Cl.: G01N 29/14, G01L 1/00

(54) **Method and apparatus for detecting convex deformations of roll-shaped bodies**

(30) Priority: 19.09.2001 JP 2001284928; 12.10.2001 JP 2001314849; 11.09.2002 JP 2002265198
(71) Applicant: Ricoh Company, Ltd., Tokyo 143-8555 (JP)
(72) Inventor: Suzuki, Kazuya, Shizuoka-ken (JP); Yamazaki, Junichi, Shizuoka-ken (JP)
(74) Representative: Schwabe - Sandmair - Marx

(57) **Abstract**

A method of detecting a convexity present on a surface of a belt-shaped member or a roll-shaped member (12), including at least frictionizing a surface of the member with a plate contact member (13) and detecting a vibration generated on the plate contact member or a change of pressure applied thereto to detect the convexity on the surface of the member.

## Description

### BACKGROUND OF THE INVENTION

### Field of the Invention

The present invention relates to a method and an apparatus of detecting convexity on surfaces of various members, in particular belt-shaped and roll-shaped members for an electrophotographic image forming apparatus.

### Discussion of the Background

Various types of belt-shaped and roll-shaped members are used for an electrophotographic image forming apparatus. Recently, demands for an electrophotographic full-color and high-quality image forming apparatus are increasing, and members for the apparatus are required to have high quality in accordance with the demands.

The belt-shaped member (hereinafter referred to as a belt-shape) is a flexible, seamless and cylindrical member. A metallic electroconductive substrate being a member for a photoreceptor, a photoreceptor belt bearing a latent image and including at least a photosensitive layer, and a resin-made transfer belt and feeding belt mainly used for forming a full-color image are practically used. In addition, recently, a resin-made or a metallic belt-shaped fixing belt which fixes a transferred toner image on a copy paper is being developed. Further, the above-mentioned metallic electroconductive substrate is being applied to the feeding belt or the fixing belt.

The photoreceptor belt is classified to a photoreceptor belt including at least a photosensitive layer formed on the above-mentioned metallic electroconductive substrate and a sheet photoreceptor including at least a photosensitive layer formed on an electroconductive layer of a resin film including the layer, the both ends of which are bonded by an ultrasonic wave, etc.

The roll-shaped member (hereinafter referred to as a roll-shape) is a rigid cylinder or a cylindrical member. An electroconductive metallic tube, a photoreceptor drum including a photosensitive layer formed thereon, and a charging and developing roller including a (semi)electroconductive elastic layer coated on a surface of an electroconductive metallic axis are practically used. An organic semiconductor, selenium and an amorphous silicone, etc. are used as a material included in the photosensitive layer of the photoreceptor drum.

These members are commonly required to have surface smoothness. Some members have a convexity or a dotted convexity impairing their smoothness, and they are regarded as poor-quality members. This is because electrophotographic image forming apparatuses having such members produce poor-quality images in many cases. Therefore, the convexity has to be detected, and such members as have a convexity out of standard for an electrophotographic image forming apparatus have to be removed in a process of producing the members.

The above-mentioned convexity will be explained, referring to examples.

The electroconductive substrate is mainly formed of nickel or stainless, etc.

A belt substrate made of the nickel is typically produced by an electroforming method such as an electroforming method using a nickel sulfamate liquid. When there is a foreign particle or an, abnormal separation of a crystal in the liquid, the resultant nickel coated surface occasionally has a convexity.

When a photosensitive layer forming liquid is coated on the nickel belt having the convexity, there is a coating defect on the convexity, and therefore, an image forming apparatus equipped with such a photoreceptor belt produces defective images.

The coating defect is inevitable by any coating methods such as a dip coating method, a spray coating method or a nozzle coating method so long as the photoreceptor belt made of nickel has such a specific convexity in greater or lesser degrees. As a resin film for use in the above-mentioned sheet photoreceptor which is one of the photoreceptor belts, e.g., when a stretched polyethyleneterephthalate film is used, a surface waviness caused by a nonuniform stretch or bonding of both ends of the film gives an adverse effect on performance of the resultant photoreceptor.

In addition, when a belt-shape made of a resin such as polyimide used for the transfer, feeding or fixing belt is produced by an extruder, the belt-shape occasionally has an uneven thickness or a surface waviness. When produced by a centrifuge, the belt-shape occasionally has a protrusion or a surface waviness. When the belts having such defects are used as members for an image forming apparatus, the apparatus produces poor-quality images.

Further, various convexities are formed on a surface of the roll-shape as well in its production process.

When a photoreceptor drum having an organic photosensitive layer formed by a dip coating method is produced, an end of the photosensitive layer occasionally has a bubble or protrusion.

In addition, a charging or developing roller produced by coating a (semi)conductive seamless tube on a surface of a conductive metallic axis occasionally has a wrinkle in its coating or includes an air or a foreign particle therein.

Various methods of detecting such convexities present on a surface of a member included in an electrophotographic image forming apparatus have been suggested, and some of them are in practical use.

For example, Japanese Laid-Open Patent Publication No. 5-18728 discloses a method of uniformly irradiating a surface of a belt-shape with light and detecting an image while projecting a fixed pattern to detect a distortion of the pattern. However, this method has a disadvantage of requiring an optical system such as a lens, a CCD and an image processor, and further a sophisticated software making a decision to pass or fail of a defect.

Japanese Laid-Open Patent Publication No. 62-189477 discloses a method of producing an image by an image forming apparatus including an amorphous silicon photoreceptor and actualizing a defect of the image to detect a spherical protrusion present on the photoreceptor. However, this is a complex method because an image forming apparatus equipped with the photoreceptor has to be set up and an image has to be produced to see. In addition, a causal relation between a defect of the image and a protrusion of the photoreceptor is uncertain, and detecting accuracy is doubtful.

Japanese Laid-Open Patent Publication No. 2000-214100 discloses an apparatus pressing a roller against a surface of a roll-shape in parallel and relatively scanning a surface of the roller to detect a protrusion from a displacement amount of the roller. This method has a problem of being difficult to detect a micro-protrusion because the protrusion has to move the roller having a mass to be detected. In addition, this method has another problem of misidentifying a dust as a protrusion when the dust is adhered to the roll-shape or the roller because the dust causes a displacement of the roller. Therefore, this method requires a complete dust removal and has a disadvantage of enlarging the apparatus.

Various methods are suggested to detect a protrusion even in a field other than a field of production technology of the electrophotographic image forming apparatus as follows:
Japanese Laid-Open Patent Publication No. 2000-258354 discloses a method of irradiating light having different colors to a printed matter from different three directions. However, since it is difficult to uniformly irradiate a whole surface at a time, an inspected area becomes a small spot. Therefore, the method has a problem of taking time to scan this inspection spot over the whole surface. In addition, a moderate protrusion cannot sufficiently be detected.
Japanese Laid-Open Patent Publications Nos. 8-35939 and 9-33449 disclose a method of detecting a protrusion present on a surface of a textile fabric sheet using a CCD. However, this method requires an illuminating system and a CCD, which enlarges an apparatus and does not accurately detect a moderate protrusion although effectively detects a micro-protrusion.
Japanese Laid-Open Patent Publication No. 8-5575 discloses a method of detecting a foreign particle protrusion and a detector optically separating the foreign particle protrusion from an adhered foreign particle of a color filter, and sorting out the foreign particle protrusion which is higher than an acceptable height. However, this apparatus is complicated because of requiring a transportable stage producing a XY coordinate and carrying a color filter, and further a complicated optical system. In addition, the apparatus cannot accurately detect a moderate protrusion. Further, when a dust is adhered to the color filter, the apparatus occasionally misidentifies the dust as a protrusion. Therefore, a complete dust removal is required before inspection and the apparatus is enlarged.
Japanese Laid-Open Patent Publication No. 10-10277 discloses a method of detecting a protrusion on an inside surface of a cylinder. However, this method has a problem of taking time to scan a gauge head over the whole inside surface of the cylinder.

As mentioned above, various convexities are frequently formed on a surface of a belt-shape or a roll-shape which is a member of an electrophotographic image forming apparatus, which are caused by its production method and directly or indirectly cause deterioration of the resultant image quality. It is typical that the convexity is detected and a member having a convexity out of standard is removed.

Although various methods of detecting the convexity are in practical use and suggested, they often misidentify a dust as a convexity and cannot accurately detect a moderate convexity or a micro-protrusion. In addition, the inspection time is long and the apparatus is complicated or large, resulting in a high cost of the inspection.

Because of these reasons, a need exists for a detection method and an apparatus easily and accurately detecting a convexity present on an inside and outside surface of a belt-shape and a roll-shape at a low cost.

### SUMMARY OF THE INVENTION AND ADVANTAGES

The object of the present invention is to provide a detection method, an apparatus, a production system, and a production method easily and accurately detecting a convexity, surface protrusions or surface unevenness present on an inside and outside surface of a belt-shape member and a roll-shape member at a low cost.

The afore-mentioned object is solved by the subject matter of the claims 1, 16, 17 and 22. The dependent claims are directed to embodiments of advantage.

Preferably, the contact member is mechanical contact member having a body, e.g. a plate contact member and/or a vibratile contact member. The vibratile contact member is capable of being vibrated due to contact with the surface of the belt-shaped member and/or roll-shaped member. The vibratile contact member may have any shape and rigidity which allows for a vibration of the member, in particular the contact member may have the shape of a plate or of a resonance body.

Preferably, contacting the surface corresponds to frictionising the surface of the member. Preferably, the contact between the belt-shaped member and/or roll-shaped member with the contact member is such that the surface of the belt-shaped member and/or roll-shaped member is scraped off. Preferably, the contact member is constituted and arranged with respect to the belt-shaped member and/or roll-shaped member such that particles (e.g. dust particles) are removed from the surface of the (belt-shaped and/or roll-shaped) member, i.e. the surface is cleaned from particles adhered to the surface or on the surface.

Preferably, the contact member contacts the surface of the (belt-shaped and/or roll-shaped) member along a line of contact which is at least approximately perpendicular to the direction of relative movement. Preferably, the line of contact or area of contact occupies most of the width of the surface (which is in particular perpendicular to the direction of relative movement).

Preferably, the contact member is integral, i.e. in one piece. However, the contact member may comprise a number or plurality of distinct contact sub-members. The contact sub-members are preferably arranged such that they contact in an adjacent or overlapping manner at least most of the width of the surface. The use of contact sub-members allow for a easier location of convexities or unevenness on the surface since each contact sub-member relates to a particular sub-section of the surface.

Preferably, the contact is performed with a predetermined force or pressure against the surface. Preferably, the contact member is constituted with a rigidity which causes a measurable displacement of the contact member in case of contacting a convexity or unevenness on the surface. Due to the displacement, the change of pressure applied to the contact member by the surface due to the convexity or unevenness may be measured (e.g. by a piezoelectric detector or an induction coil).

In case the contact member is a vibratile, the contact member (vibratile contact member) is preferably able to vibrate in the acoustic frequency range. This allows to use conventional and cost effective detection equipment. Preferably, the speed of relative movement between the (belt-shaped and/or roll-shaped) member and the contact member is set such that convexities or uneven structures having a size within a predetermined range cause vibrations in the acoustic range (e.g. 1 Hz to 30 kHz). The predetermined range of the uneven surface structures may be between 1 µm to several mm.

Preferably, an analysis of the detected signals is performed for determining the presence and in particular the location of a convexity or surface unevenness. Preferably, in case a convexity or unevenness is identified due to the (in particular automatic) analysis, an action is caused, in particular a removing action for removing the convexity and/or an alarm action to alarm operators.

Preferably, the detection apparatus for detecting surface unevenness or convexities in accordance with the invention, preferably comprises a mechanism which is configured to bring the plate contact member in contact with a surface of the (belt-shaped and/or roll-shaped) member and to release the contact member therefrom.

Preferably this mechanism causes a contact in a manner as mentioned above, in particular results in frictionizing the surface.

Preferably, the contact member has at least one (sharp) edge which contacts the surface.

The belt-shaped members and roll-shaped members represent only examples for members of which the surface may be detected. Preferably, surfaces of any other kind of surfaces may be detected in accordance with the invention, in particular endless and/or closed and/or reentrant surfaces. Preferably, those surfaces are moved or movable in a cyclic and/or rotational manner with respect to the contact member for performing the detection. The surface comprises in particular a surface layer. The surface is in particular chargeable.

Advantageously, the present invention provides a detection method and an apparatus easily and accurately detecting a moderate convexity or even a micro-protrusion present on an inside and outside surface of a belt-shape member and a roll-shape member at a low cost.

Advantageously, the present invention provides a production method and a system of producing the above-mentioned belt-shape member and roll-shape member using the above-mentioned detection method and apparatus.

Preferably, a method of detecting a convexity or unevenness present on a surface of a belt-shaped member or a roll-shaped member, includes at least frictionizing a surface of the member with a plate contact member; and detecting a vibration generated on the plate contact member and/or a change of pressure applied thereto to detect the convexity on the surface of the member.

Preferably, a detection apparatus is provided, which includes at least a plate contact member; a first mechanism driving a belt-shaped member or a roll-shaped member; and a second mechanism contacting the plate contact member to a surface of the member and releasing the plate contact member therefrom, whererin a surface of the member is frictionized by the plate contact member and a vibration generated on the plate contact member or a change of pressure applied thereto is detected to detect a convexity present on the surface of the member.

Preferably, a method and a system of producing a belt-shaped member or a roll-shaped member are provided, including at least the above-mentioned detection method and apparatus.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawing(s) in which like reference characters designate like corresponding parts throughout and wherein:
Fig. 1 is a schematic view illustrating a cross section of an embodiment of the detector of the present invention;
Fig. 2 is a schematic view illustrating a first embodiment of the detector of the present invention;
Fig. 3 is a schematic view illustrating a second embodiment of the detector of the present invention;
Fig. 4 is a schematic view illustrating a third embodiment of the detector of the present invention;
Fig. 5 is a schematic view illustrating a fourth embodiment of the detector of the present invention;
Fig. 6 is a schematic view illustrating a fifth embodiment of the detector of the present invention;
Fig. 7 is a schematic view illustrating embodiments of the plate contact member of the detector of the present invention;
Fig. 8 is a flow chart showing a peak hold mechanism;
Fig. 9 is a flow chart showing a peak hold mechanism equipped with a frequency filter;
Fig. 10 is a flow chart showing a mechanism performing FFT calculation;
Fig. 11 is a flow chart showing a mechanism performing a short-time Fourier transform;
Fig. 12 is a flow chart showing a mechanism performing a wavelet transform;
Fig. 13 is a flow chart showing a mechanism performing a bandpass filter process;
Fig. 14 is a flow chart showing a mechanism performing a Wigner distribution;
Fig. 15 is a schematic view illustrating an embodiment of the electroforming apparatus of the present invention;
Fig. 16 is a chart of an original signal detecting a protrusion of a nickel belt; and
Fig. 17 is a chart showing a wavelet transform result of a protrusion signal of a nickel belt.

### DETAILED DESCRIPTION OF THE INVENTION

Generally, the present invention provides a method of detecting a convexity present on a surface of a belt-shaped member or a roll-shaped member, including at least frictionizing a surface of the member with a plate contact member; and detecting a vibration generated on the plate contact member or a change of pressure applied thereto to detect the convexity on the surface of the member.

The detector for use in the detection method of the present invention includes at least a plate contact member and a mechanism contacting the plate contact member to a subject and releasing the member therefrom. The mechanism is located in a holder arranged at an opposite side of a portion where the plate contact member contacts the subject. A hinge connected with the holder is driven to perform contact and release of the plate contact member.

The belt-shape or roll-shape is a member for an electrophotographic image forming apparatus, and is not particularly limited as mentioned above if the former is a flexible and seamless tube and the latter is a rigid cylinder or a cylindrical subject.

Specific examples of the belt-shape include a metallic electroconductive substrate included in photoreceptor, a photoreceptor belt bearing a latent image and including at least a photosensitive layer and a resin-made transfer, feeding and fixing belt mainly used for forming a full-color image. Specific examples of the roll-shape include a photoreceptor drum, a charging roller and a developing roller.

The convexity is mostly formed in a production process of the belt-shape or roll-shape, and means a microscopic concavo cubic form which is a part of a surface of the belt-shape or roll-shape and present in a body or dotted therewith. This is not particularly limited, and specific examples of the convexity include a protrusion, a slack, a surface waviness, a thickness irregularity, a wrinkle, a bubble, a bulge due to a mixture of an air or a foreign particle, a ground swell like a moderate arc or an arcuation, or a micro-protrusion.

The convexity has a wide variety of sort, number, form, size and location, which vary depending on a member or its production method.

For example, when the convexity is a protrusion, some protrusions are micro-protrusions having a diameter and a height of a few µ and others are large protrusions having a diameter of a few mm and a height of several decade µ.

As for the relative displacement of the contact portion, the belt-shape or roll-shape may be displaced, or the plate contact member contacting the belt-shape or roll-shape may be displaced.

When the belt-shape or roll-shape is displaced, the belt-shape is usually supported with a roll inside through the (cylindrical) belt-shape and rotated by rotation of the roll, and the roll-shape itself is rotated because of being rigid.

In the present invention, the plate contact member contacts and frictionizes a surface of a subject, and when a convexity is present thereon, an end of the member vibrates and/or a pressure thereto changes due to the presence of the convexity. Hereinafter, a contact portion of the plate contact member to the subject is referred to as a contact portion.

Namely, the vibration or change of pressure at the contact portion has to be transmitted without decay, and a composition of the plate contact member is not limited if only the contact portion at least detects the vibration and change of pressure.

However, the contact portion preferably has a Rockwell hardness of from 65 to 140, and more preferably from 100 to 135 when measure based on JIS K 7202 because the contact portion must not damage the subject although the harder the better to accurately detect the vibration and change of pressure.

In addition, the plate contact member preferably has a thickness of from 70 to 300 µ, and more preferably from 100 to 200 µ. The plate contact member need not have a uniform thickness from one end to the other end, i.e., a supporting portion, and the contact portion may be thinner than the supporting portion.

The contact portion typically has to have a width equal to or wider than a width of the subject. However, for example, when a photosensitive layer width is smaller than a photoreceptor substrate width, i.e., an effective use width of a subject is smaller than a width thereof, the effective use width can be the contact portion width.

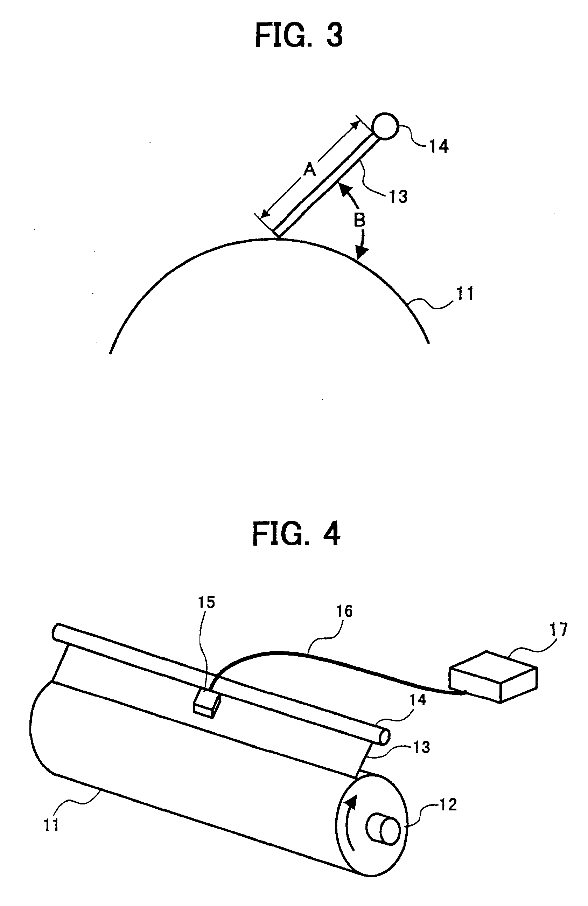

In addition, a length of A in Fig. 3, i.e., a length between the holder of the plate contact member and the contact portion is not shorter than 5 mm. The length is preferably from 10 to 50 mm, and more preferably from 15 to 50 mm according to a size and a detection sensitivity of an apparatus.

A material composing at least the contact portion of the plate contact member is not particularly limited unless it damages the subject. Specific examples of the material include acrylic resins such as polyethyleneterephthalate, polybutyleneterephthalate, polyvinylchloride, polypropylene, polystyrene, polyethylene, ultra high-molecular-weight polyethylene; plastic materials such as nylons, polycarbonate, fluorocarbon resins, polyurethane, phenol resins, urea resins, melamine-formaldehyde resins and epoxy resins; and metals such as aluminium, copper, stainless and phosphor bronze. A plastic-coated metal can also be used.

The plate contact member may be formed of a single material and may have a different material or a thickness from that of its contact portion and holder. When the plate contact member is formed of plural materials, the materials can be melted and adhered with a heat or can be adhered with an adhesive.

A contact angle of the plate contact member to the subject can be optionally determined based on detection accuracy of the convexity. Namely, B in Fig. 3 is preferably from 30 to 80°, and more preferably from 30 to 60°.

In addition, a pressure of the plate contact member against the subject has to be a degree so as to accurately detect the convexity and not to damage the subject. Therefore, the pressure is not limited depending on the material or size of the plate contact member and the subject. For example, when the contact portion has a width of 40 cm, the pressure on the overall width is preferably from 0.03 to 1 N, i.e., 0.00075 to 0.025 N at a contact width of 1 cm, and more preferably from 0.05 to 0.3 N, i.e., 0.00125 to 0.025 N at a contact width of 1 cm.

The pressure distribution is preferably uniform on overall width of the plate contact member and a contact side of the plate contact member is preferably a straight line. However, according to a surface condition of the subject, the contact side may be a rectangle or a curved surface, and the contact pressure in the width direction may be changed.

The plate contact member has to be mechanically contacted to and released from a surface of the subject, and various mechanical methods such as an electromagnetic solenoid, an air cylinder, a motor and a cam can be used. When the belt-shape is held with a roll inside therethrough and rotated, the belt-shape may be hooked on one or plural rolls, or may be hooked on and its diameter be spread by a cylindrical material capable of spreading the diameter.

When the belt is hooked on the roll, the roll diameter may optionally be determined according to a size of an apparatus and is not limited. However, the roll has to have such a diameter as does not extremely bend the belt on the roll surface, and typically, the diameter is preferably not less than 20 mm.

The plural rolls on which the belt is hooked are typically formed of a metal, and at least one of the rolls can have a surface layer formed of a synthetic resin or an elastic material for the purpose of improving a frictional force or obtaining a cushion effectiveness against the seamless belt.

The roll surface layer is formed on a surface of a core material of the roll typically formed of a metal such as stainless and aluminium. The surface layer is optionally a semi-conductive layer in which an electroconductive material such as carbon black is included in a synthetic resin.

Specific examples of the synthetic resin include rubber-like materials such as polyurethane, a natural rubber, a butyl rubber, a nitrile rubber, a polyisoprene rubber, a polybutadiene rubber, a silicone rubber, a styrene-butadiene rubber, an ethylene-propylene rubber, an ethylene-propylene-diene rubber, a chloroprene rubber, an acrylic rubber and their mixtures. When the above-mentioned rubber materials are used, a vulcanizing agent, a vulcanizing auxiliary agent, a softener and other additives are typically included therein. In addition, a foam material can be used as the roll surface layer. The surface layer can be formed on the above-mentioned core material by any methods such as an injection method, a press method and a extrusion method.

When the surface layer is a semi-conductive layer, a semi-conductive resin composition in which a resin-coated carbon black is included in a base resin is preferably used.

The surface layer preferably has a resistance close to that of the belt, and typically has a resistance of 10 to 1/1000 times as much as that of the belt on an average. In terms of stabilizing the resistance of the belt, it is desirable that the roll surface layer has a lower resistance (higher conductivity) than that of the belt on an average, and the resistance is preferably from 1/1 to 1/1000, and more preferably from 1/10 to 1/100 times as much as that of the belt on an average.

The relative displacement speed between the subject and the plate contact member is preferably from 5 to 100 mm/sec, and more preferably from 20 to 50 mm/sec. At this time, the displacement speed is preferably fixed, but a change of the speed of ± 30 % does not largely affect the detection accuracy. In addition, when the plate contact member frictionizes the subject at a fixed speed and detects a vibration at a position, it is effective to make the plate contact member frictionize the position again at a different speed so as to improve the detection accuracy.

The method of the present invention, using a plate contact member as mentioned above can particularly detect a ground swell or arcuation like a moderate arc, or a micro-protrusion.

A detection of a vibration using the plate contact member can be made by an acoustic sense of a human as the simplest way. Namely, when the subject and the plate contact member are manually or mechanically frictionized, a presence of a convexity can be detected if a sound caused by the friction therebetween is emitted. The present inventors are aware that this method is sufficiently practical.

However, the present inventors have studied a method of electrically detecting the vibration, which is more time saving and efficient than the detection method of manually or mechanically frictionizing the subject and the plate contact member.

As one of the methods, a peak hold processing method can be used, which detects a vibration or a change of pressure with a vibration sensor or a pressure sensor equipped with the plate contact member and performs a peak hold process of the detected signal to determine a size of the peak.

As the vibration sensor and the pressure sensor for use in the present invention, various sensors can be used. For example, a piezoelectric device using a piezoelectric ceramic such as valium titanate and zirconium titanate, a condenser, a microphone, a semi-conductive pressure sensor, etc. can be used.

The typical piezoelectric device has an output voltage of from 10 to 100 mV/G and a reply frequency of from 2 to 2,000 Hz, which can sufficiently be used and other piezoelectric devices can also be used if they have proper circuits.

The piezoelectric device is classified to a unimorph type and a bimorph type, and either of them can be used. When the piezoelectric device is equipped, directions of the vibration and the detection are preferably conformed to detect the vibration with a high sensitivety.

In addition, a plate contact member equipped with plural sensors having a different frequency characteristic or a different sensitivity can be used in the present invention, to improve the detection accuracy and expand the detectable range.

For example, when a convexity present on the subject is a protrusion having a diameter of a few µ and a height of a few µ or a diameter of a few mm and a height of several decade µ as mentioned above, both a micro-protrusion and a large ground swell can be detected if a sensor capable of detecting the micro-protrusion and a sensor capable of detecting the large ground swell are equipped.

Therefore, even when protrusions or surface variations having different forms and sizes are widely spread over the subject, the plural sensors can detect them while a sole sensor and a detector circuit cannot.

In addition, the plate contact member does not have to be one plate, plural plate contact members can contact a surface of the subject in consideration of deterioration of the detection sensitivity.

In this case, each of the plate contact members may have a different thickness, a size, a material and a contact pressure.

Further, a sensor equipped with the plate contact member can be changed to effectively detect another convexity present in the width direction of the subject.

For example, even a few µ high protrusion in an image forming area of an electrophotographic photoreceptor largely affects the resultant image quality, but a few µ high protrusion out of the image forming area at an end of the photoreceptor does not affect the resultant image quality at all. When an object to be detected is different according to a portion to be detected, the above-mentioned method can accurately detect a protrusion and a surface variation.

After a vibration and/or a change of pressure detected by the sensor are/is converted into an electrical signal, the peak hold process is performed on the signal to compare a maximum strength obtained from the peak hold process with a threshold.

When the peak hold process is performed, a detector including a plate contact member equipped with at least one sensor; a mechanism performing the peak hold process on an electrical signal converted from a vibration and/or a change of pressure detected by the sensor; and a mechanism comparing a maximum strength obtained from the peak hold process with a threshold, are used.

In order to reflect a result of the above-mentioned comparing process, an operation to be performed afterwards includes 1) removing an out-of-standard subject by displaying the result on a paper or a display of a displaying mechanism or 2) running a computer programmed to automatically remove or lighting a lamp to manually remove the out-of-standard subject, etc. However, these are not limited. Places where the comparing process and the operation afterwards are performed need not be close to each other, and may be remote from each other. In addition, the peak hold process can be performed with an electric circuit or a software.

When the vibration sensor or pressure sensor is used, it is effective to determine its frequency distribution so as to improve the detection accuracy because a signal obtained from the sensor includes signals having various frequencies. Various methods can be used to determine the frequency distribution, such as an electric circuit or a software to perform a so-called Fourier transform.

Further, the present inventors have studied a method of further improving the detection sensitivity and accuracy, and found that a multiple resolution analysis is an effective method of analyzing a sporadic signal without a continuity from a vibration of the contact portion of the plate contact member.

In the present invention, an electrical signal from the vibration or pressure sensor equipped with the plate contact member is digitalized with an A/D converter, and the resultant digital signal is processed with the multiple resolution analysis to identify a vibration or a change of pressure.

The multiple resolution analysis is a method of analyzing a time shift of a variation while analyzing a spectrum in its frequency domain. In the present invention, a short-time Fourier transform, a wavelet transform, a method of determining a Wigner(-Viret) distribution and a method of using a bandpass filter are used.

Therefore, a detector using a process with the multiple resolution analysis includes a plate contact member equipped with at least one sensor, a mechanism performing the multiple resolution analysis process on an electrical signal converted from a vibration and/or a change of pressure detected by the sensor and a mechanism comparing a result of the process with a threshold.

An operation to be performed afterwards to reflect the result of the multiple resolution analysis process is the same as that of the above-mentioned comparing process of the peak hold process method.

These four methods of the multiple resolution analysis are generally known as mentioned in, e.g., "Wavelet Analysis" issued in June, 1997, by Kyoritsu Shuppan and written by Ryuuichi Ashino and Shizuo Yamamoto.

Since a result of the multiple resolution analysis differs and has an advantage according to each method, it is preferable in the present invention to select a method in compliance with a supposed convexity according to a subject.

For example, when the convexity has a uniform form and a size, the short-time Fourier transform and the Wigner(-Viret) distribution are suitable, and when the convexity has a variety of form and size, the wavelet transform is suitable.

In addition, the bandpass filter method has an advantage of processing an analog signal at a high speed because it can analyze both a digital signal and an analog signal.

In the present invention, a result obtained from each of the short-time Fourier transform, wavelet transform, Wigner distribution process and bandpass filter process is compared with results of a normal subject and an abnormal subject to make a decision to pass or fail.

In an analysis of the present inventors, an electret microphone from Sony Corp. is used as a microphone, and an analog signal obtained by the microphone is converted into a digital signal with an A/D converter from Burr-Brown, which is downloaded in a personal computer from IBM Corp.

A sampling speed of the A/D conversion is 44,100 Hz and a limit of resolution is 10 bits. A process of a measured signal, the multiple resolution analysis thereof, computing the Wigner distribution, etc. are performed by a software made from a C language.

Next, another method of improving the accuracy of the detection method of the present invention will be explained.

The method is that, in a case where the relative friction between the plate contact member and a subject is performed by, e.g., a rotation of the subject, when a convexity is detected in a rotating direction (a forward direction), the rotating direction is reversed (a reverse direction) to perform detection again at a position or a vicinity thereof where the convexity is detected in the forward direction.

This detecting operation by frictionizing in the forward and reverse direction can be performed even when the plate contact member does not have a sensor. However, the plate contact member preferably has a sensor to automatically and more precisely detect a convexity.
In order to further improve the detection accurancy, the number of times of friction in the forward and reverse directions is not limited to one time, and plural times thereof can optionally be performed, e.g., two times thereof in the forward direction and one time thereof in the reverse direction may be performed. In addition, the friction speed may be changed and a combination of the change of friction number and speed may be used.

When a detecting operation is performed by such a friction in the forward and reverse directions, information of a detected convexity occasionally differs. By comparing the information, more precise or intimate information of the convexity such as a size, a form, the number or the location thereof can be obtained. In this case, a control mechanism switching the forward and reverse directions effectively performs the operation.

In addition, when a sound or a signal detected by a friction in the forward direction is too small to identify a presence or a position of a convexity, a friction in the reverse direction can detect the convexity again.

Further, a friction in the forward direction detects a presence of a convexity first, and repeating frictions in the forward and reverse directions while optionally changing the friction speed to precisely and intimately detect the convexity can improve the detection accuracy.

This method can further be used to identify whether a convexity detected with a friction in the forward direction is due to a dust (particularly a small dust) adhered to a subject.

When a presence of the dust is identified, it can be expected that a friction in the reverse direction or repeating frictions in the forward and reverse directions of the plate contact member removes the dust.

Hereinafter, the detection apparatus of the present invention will be explained, referring to the drawings.

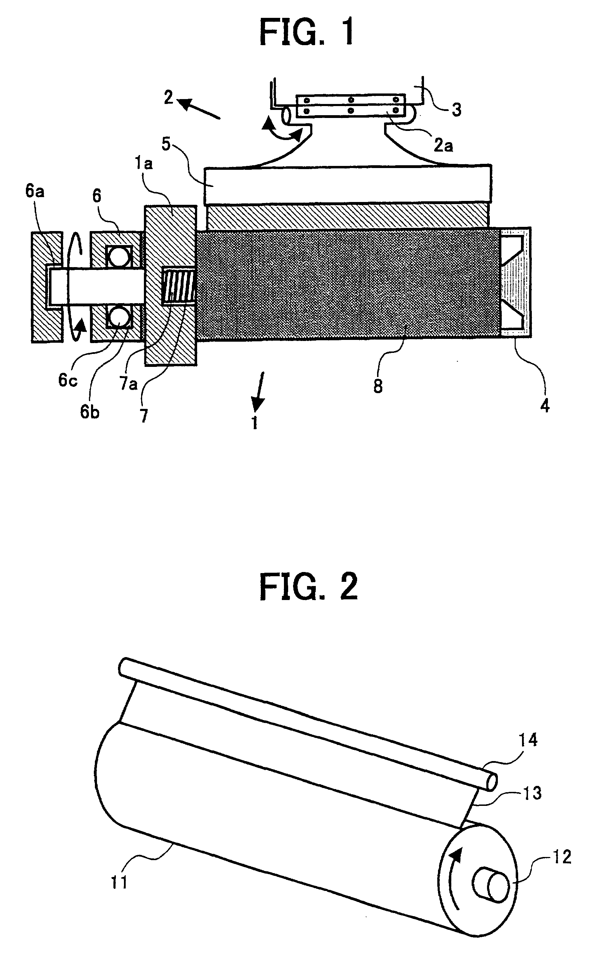

Fig. 1 is a schematic view illustrating a cross section of an embodiment of the detector of the present invention.

In Fig. 1, a convexity like a protrusion on a surface of a subject which is a belt-shaped seamless metallic substrate 8 for an electrophotographic photoreceptor is detected. The apparatus includes a member (a holder 1) detachably holding the metallic substrate 8 inside thereof, a plate contact member 5, and a blade holder 2 holding the plate contact member.

The substrate 8 is held on the roll-shaped holder 1 and the plate contact member 5 driven by the blade holder 2 holding the plate contact member is contacted to the substrate 8. Then, the substrate 8 is frictionized while rotated and a contact portion of the plate contact member 5 vibrates or emits an abnormal noise at the same time due to a convexity such as a protrusion when the convexity is present on a surface of the substrate 8. Thus, a convexity is detected by an operator.

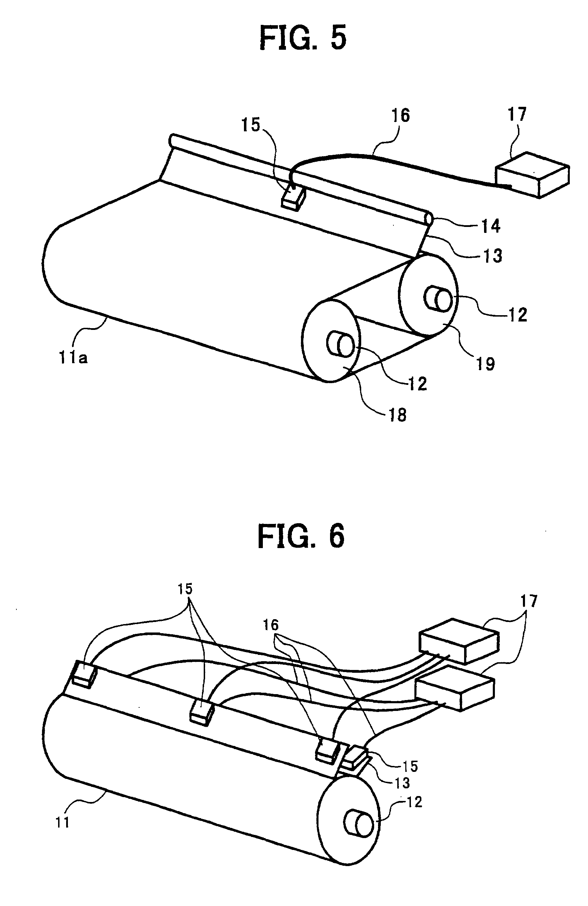

In the detecting apparatus in Fig.1, the substrate holder 1 has a wheel 6 with a shaft hole having a spline (not shown), which is connected to a rotating shaft of the substrate holder 1 with a key inserted into the spline. An end of the rotating shaft is supported by a roller bearing 6a and the other end thereof is supported by a U-type roller bearing (not shown). In Fig. 1, 6c is a bearing arranged in a space 6b.

As the rotating means, a motor can also be used other than the wheel 6.

Fig. 2 is a schematic view illustrating a first embodiment of the detector of the present invention.

In Fig. 2, numeral 11 is a roll-shape or a belt-shape supported with a roll inside, and numeral 12 is an axis therefor and rotatable in a direction indicated by an arrow. Numeral 13 is a plate contact member and 14 is a hinge holding the plate contact member, contacting the plate contact member to a subject and releasing the plate contact member therefrom. The plate contact member 13 is a polyester film having a thickness of 100 m, a width of 25 mm and a length of 450 mm.

In Fig. 2, the plate contact member 13 contacts and frictionizes a surface of the member for an electrophotographic image forming apparatus 11, and a presence of a convexity can easily be detected when the plate contact member 13 contacts the convexity on the surface of the member 11 and emits a vibration sound.

Fig. 3 is a schematic view illustrating a second embodiment of the detector of the present invention.

In Fig. 3, numeral 11 is a member for an electrophotographic image forming apparatus, 13 is a plate contact member, 14 is a rotatable hinge holding the plate contact member, A is a width thereof and B is an angle at which the plate contact member contacts the member 11.

The angle B may be adjusted according to a convexity on the surface of the subject and a sensitivity of a sensor. Depending on a form of the subject and a contact angle of a member equipped with a sensor, detection power largely differs according to an operating direction of the member equipped with a sensor. In such a case, the member and the subject are repeatedly contacted to each other and plural signals from the sensor can improve the detection accuracy.

In the present invention, when a dust is adhered to or put on a subject, since the plate contact member is contacted and pressurized to the subject as shown in Fig. 3, a contact portion of the plate contact member strips or removes the dust. Accordingly, since the contact portion thereof does not vibrate due to a dust, the dust is not mistaken for a convexity.

To the contrary, according to a conventional optical method of using a laser beam or a method disclosed in Japanese Laid-Open Patent Publication No. 2000-214100 of contacting a roll to a subject, most of dusts on a surface of a subject are mistaken for convexities and a dust removal process such as an air blow is definitely indispensable before detection.

In the present invention, as mentioned above, such a dust removal process of a conventional method is not necessarily performed. Therefore, the detection method of the present invention is more simple and this is one of advantages of the present invention. However, it goes without saying that the detection accuracy becomes higher if a dust is removed before detection even in the detection method of the present invention.

Fig. 4 is a schematic view illustrating a third embodiment of the detector of the present invention, having a sensor on its plate contact member.

In Fig. 4, numeral 11 is a roll-shape member or a belt-shape member supported with a roll inside, and numeral 12 is an axis therefor and rotatable in a direction indicated by an arrow. Numeral 13 is a plate contact member, 14 is a hinge holding the plate contact member, contacting the plate contact member to a subject and releasing the plate contact member therefrom, 15 is a vibration or pressure sensor, 16 is a cable transmitting a signal therefrom and 17 is a processor processing the signal.

Fig. 5 is a schematic view illustrating a fourth embodiment of the detector of the present invention, having a sensor on its plate contact member and two rolls supporting a belt-shape inside, which is hanged over therebetween.

In Fig. 5, numeral 11 is belt-shape, 18 and 19 are rolls hanging the belt, 12 are their axes, 13 is a plate contact member, 14 is a hinge holding the plate contact member, contacting the plate contact member to a subject and releasing the plate contact member therefrom, 15 is a vibration or pressure sensor, 16 is a cable transmitting a signal therefrom and 17 is a processor processing the signal.

Fig. 6 is a schematic view illustrating a fifth embodiment of the detector of the present invention, having two plate contact members with three sensors each and two processors. In Fig. 6, numeral 11 is a roll-shape or a belt-shape supported with a roll inside, and numeral 12 is an axis therefor and rotatable in a direction indicated by an arrow. Numeral 13 is a plate contact member, 15 is a vibration or pressure sensor, 16 is a cable transmitting a signal therefrom and 17 is a processor processing the signal.

In this case, two plate contact members having three sensors each and two processors are arranged.

After a convexity is detected by a sensor, the convexity is detected by another sensor again. Therefore, even when there is a wide variety of convexities such as numbers, forms and sizes and only one sensor and detector circuit cannot detect them, plural sensors, mounting members and detector circuits (hereinafter referred to as a sensor unit) are equipped, and the combination of which is respectively optimized according to the convexities, can detect them.

For example, when there are a convexity of large waviness having a height of a few mm and a convexity of micro-protrusion having a height of a few µ, a sensor unit to detect the large waviness and a sensor unit to detect the micro-protrusion can detect the two convexities.

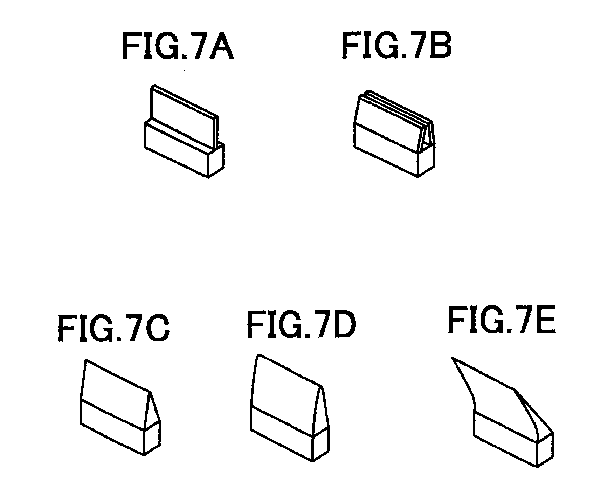

Fig. 7 is a schematic view illustrating embodiments of the plate contact member of the detector of the present invention, and their contact portions are turning up. An edge of the plate contact member is preferably sharp to detect a convexity.

For example, (a) is a standard type plate contact member, (b) is a type having two plate contact members, (c) is a three-corner plate contact member, (d) is a plate contact member having a curved-surface edge and (e) is an inclined plate contact member.

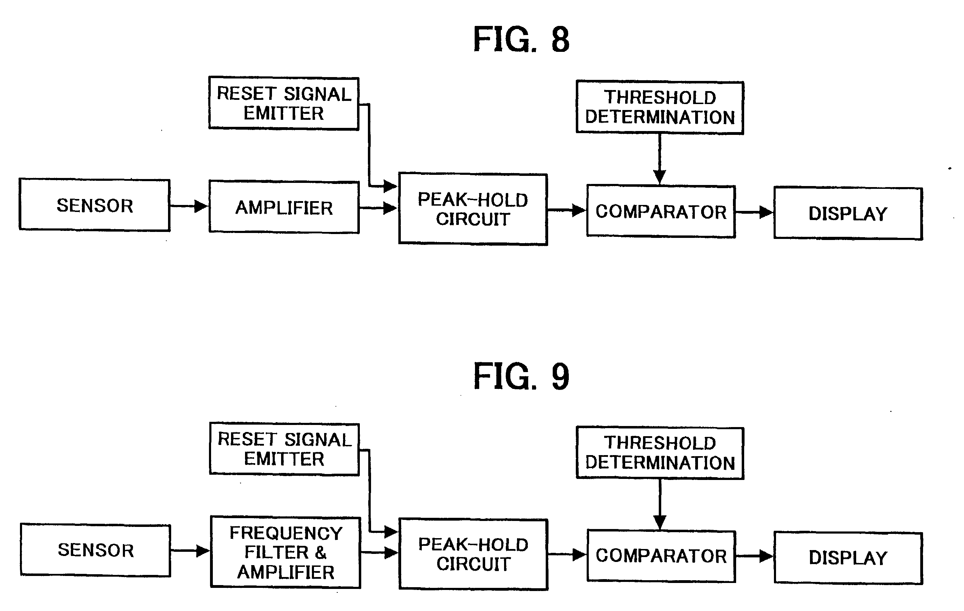

Fig. 8 is a flow chart of processing a signal in the signal processing mechanism of the detector shown in Fig. 4 or 5.

A signal from a reset signal transmitter enters a peak hold circuit just before detection and the peak hold circuit is reset.

After the reset process, a signal from a sensor is amplified with an amplifying circuit and enters the peak hold circuit. The peak hold circuit is a circuit recording a strength of the largest signal entered therein at a time, and the maximum strength recorded at a time is output at any time or when a request signal (not shown) is input. Then, the maximum strength is compared with a threshold otherwise input and compared with a standard, and the result is displayed. All or a part of the process can easily be performed with a software.

In the present invention, a signal of a vibration or a change of pressure detected by a sensor is passed through a frequency filter to remove unnecessary frequency members, and a protrusion or a surface variation can more accurately be detected.

Fig. 9 is a flow chart showing this process, and a signal from a sensor enters a peak hold circuit after passed through a frequency filter and an amplifying circuit.

At this point, a signal from a reset signal transmitter enters a peak hold circuit just before detection, and the peak hold circuit is reset. The computed peak value is compared with a threshold otherwise input and compared with a standard, and the result is displayed. All or a part of the process can easily be performed with a software.

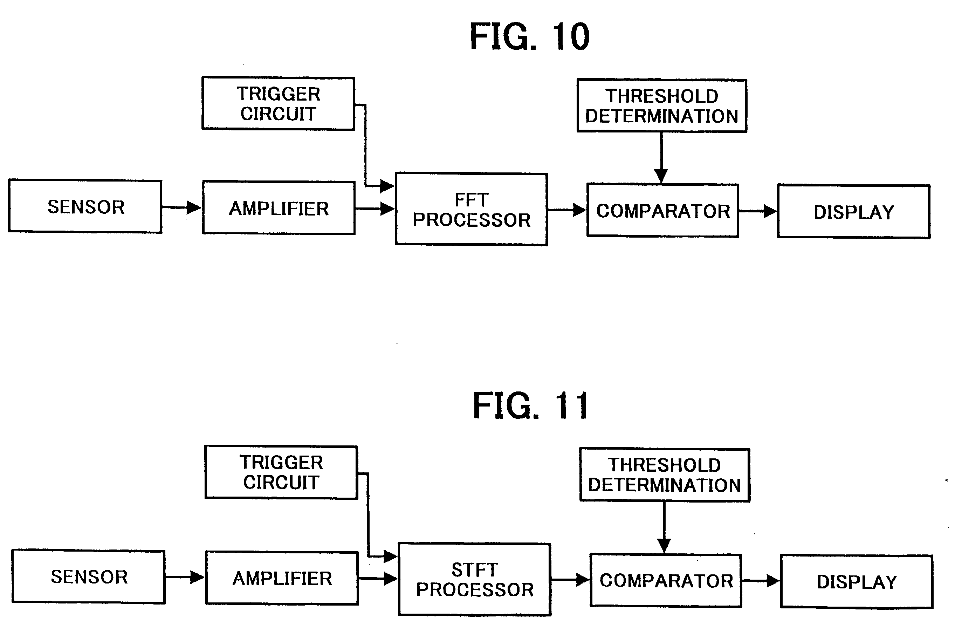

Fig. 10 is a flow chart showing a process of computing a frequency distribution of a signal from a sensor, and the frequency distribution of the signal from the sensor is computed with an instruction from a trigger circuit after passed through an amplifying circuit.

In Fig. 10, a FFT processor computes the frequency distribution with a mechanism such as a Fourier transform. The frequency distribution computed by the FFT processor is compared with a threshold otherwise input and compared with a standard, and the result is displayed.

Fig. 11 is a flow chart showing an embodiment of performing a process of a signal from a sensor with a short-time Fourier transform.

In Fig. 11, a STFT processor has a mechanism performing the short-time Fourier transform. The mechanism computes a time-frequency analysis or a spectrogram of a vibration or a change of pressure with the short-time Fourier transform. The short-time Fourier transform may be a short-time high speed Fourier transform using a speedup algorithm. A part of the process can be performed with a software.

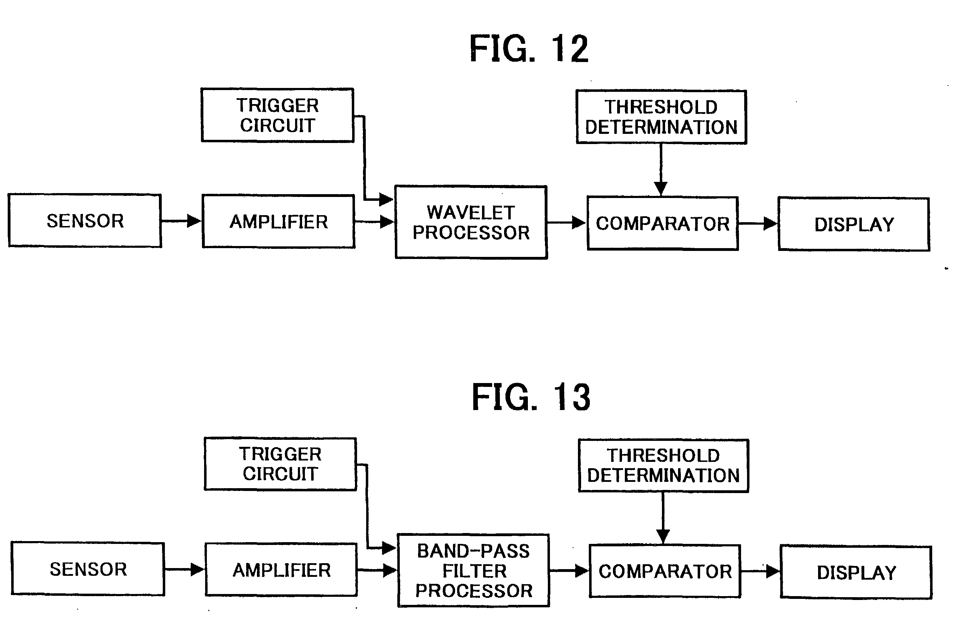

Fig. 12 is a flow chart showing an embodiment of performing a process of a signal from a sensor with a wavelet transform.

In Fig. 12, a processor has a mechanism performing the wavelet transform. The mechanism performs a multiple resolution analysis of a vibration or a change of pressure with the wavelet transform. A part of the process can be performed with a software.

Fig. 13 is a flow chart showing an embodiment of performing a process of a signal from a sensor with a bandpass filter.

In Fig. 13, a processor has a mechanism performing the bandpass filter process. The mechanism performs a multiple resolution analysis of a vibration or a change of pressure with the bandpass filter process. A part of the process can be performed with a software.

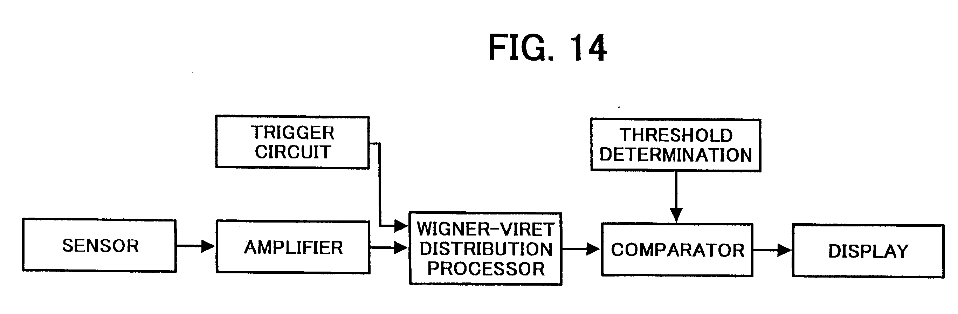

Fig. 14 is a flow chart showing an embodiment of performing a process of a signal from a sensor with a Wigner distribution.

In Fig. 14, a processor has a mechanism computing the Wigner distribution. The mechanism performs a multiple resolution analysis of a vibration or a change of pressure with the Wigner-Viret distribution. A part of the process can be performed with a software.

The display mentioned in Figs. 8 to 14 is a display displaying and evaluation result of a convexity, and displays such as a lamp, a LED, a CRT and a liquid crystal can be used. Instead of the displays, the evaluation result of the convexity can be electrically or optically transmitted to other devices.

The display is means of displaying a convexity detected, a location and a size of the convexity and a comparison result of the convexity with a threshold, which are detected and processed with the methods of the present invention. In addition, the display is combined with the detection apparatus of the present invention and arranged close to or remote from a production line of the belt-shape or the roll-shape to form a production system.

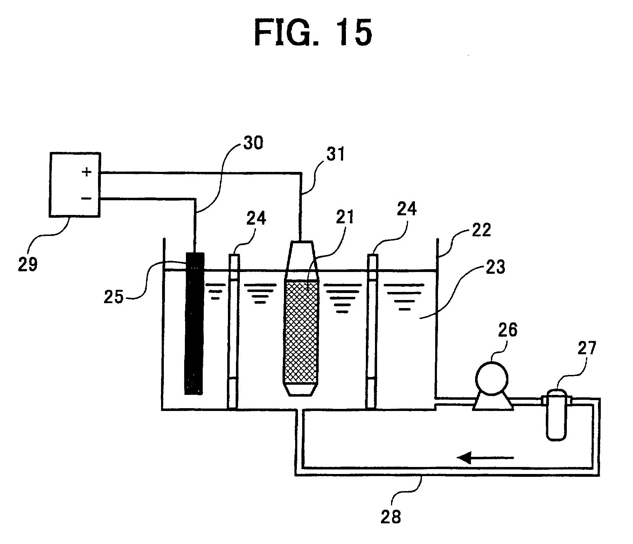

Fig. 15 is a schematic view illustrating an embodiment of the electroforming apparatus to prepare a nickel belt which is one of belt-shapes of the present invention.

In the electroforming apparatus shown in Fig. 15, a metal mold 21 as a cathode is dipped in an electroforming tank 22 including a sulfamic acid liquid as an electroforming liquid 23, and framed with a cathode case 24 equipped with a cathode slit preventing an anion which is a cause of a gas formation from passing through the case.

A nickel anode 25 is arranged in the electroforming tank 22 as a counterpart of the cathode, i.e., the metal mold 21, and a direct-current electricity from a rectifier 29 is applied to the anode 25 and the cathode of metal mold 21 through wires 30 and 31.

The metal mold 21 is arranged so as to be rotated with a rotator (not shown), and a pipe for circulating the electroforming liquid 28 in the electroforming tank 22 is arranged. The pipe for circulating the electroforming liquid 28 has a barrier filter for the electroforming liquid 27 to revitalize the liquid and a circulation pump 26 to derive the fatigued liquid from the tank 22 and to feed the revitalized liquid therein.

The detection method of the present invention, as mentioned above, can detect any convexities on surfaces of various members for use in an electrophotographic image forming apparatus. In particular, a ground swell and an arcuation like a moderate arc, or a micro-protrusion can be detected, and the detection method of the present invention can further be used for recycled members of the members.

In addition, the detection method of the present invention using a plate or a plate with a sensor can inspect not only a peripheral surface of a subject but also an inside surface of a belt-shape, e.g., an inside surface of a metallic belt, which is coated by a spray coating method.

Further, when a member having a convexity detected by the detection method of the present invention does not conform to a standard member for an electrophotographic image forming apparatus, the member is excluded as a defective member. Therefore, when the detection apparatus of the present invention is installed in a production line of the roll-shape or the belt-shape, a production system having a high efficiency can be constructed. In this case, the apparatus can be equipped with the above-mentioned display.

Having generally described this invention, further understanding can be obtained by reference to certain specific examples which are provided herein for the purpose of illustration only and are not intended to be limiting.

### EXAMPLES

First, a method of producing a nickel belt which is one of belt-shapes to be inspected will be explained.

### Preparation for an electroforming liquid

Five to 30 g/L of halogenated nickel (nickel chloride or nickel bromide), 20 to 40 g/L of boric acid, an adequate dose of Nickelight S from Nihon Kagaku Sangyo Co., Ltd. and 1 to 20 g/L of 2-ethylsodiumsulfate were additively included in 350 to 600 g/L of a nickel sulfamate liquid from Nihon Kagaku Sangyo Co., Ltd. to prepare 400 L of an electroforming liquid.

### Electroforming conditions

In the apparatus shown in Fig. 15, a stainless metal mold was used for the cathode and a Nickel S Pellet from Shimura Kako Co., Ltd. was used for the anode. A current-carrying time was 125A x 30 min, a number of revolution of the metal mold was 6 rpm and a temperature of the electroforming liquid was 50°C.

In addition, as the metal mold, a metal mold formed of a steel tube for piping from SUS304. The metal mold has a 1 mm smaller diameter at the upper end thereof having a length about 25 mm and this portion is used as a upper end cut portion of a precipitated nickel film. In addition, the metal mold has a 1 mm smaller diameter at the lower end thereof having a length about 25 mm and this portion is used as a lower end cut portion of the precipitated nickel film. A portion between the upper and lower end is a precipitated portion for a nickel belt and the surface roughness (R max) is 0.5.

On these electroforming conditions, 50 seamless nickel belts having a diameter of 168 mm, a width of 466 mm and a thickness of 30 µ were prepared. Next, both ends of each nickel belt were cut such that the belt had a width of 420 mm. Ten nickel belts respectively having different degrees of protrusion were selected from these 50 nickel belts. The thus prepared belts were numbered from 1 to 10.

### Example 1

This is an example of detecting a convexity with a sound arose when the plate contact member and the belt-shape are contacted to each other.

Each of the thus prepared nickel belts was set in the apparatuses shown in Figs. 1 and 2.

In Fig. 2, the roll having the nickel belt on was rotated while the plate contact member 3 was contacted to the nickel belt, and a sound emitted from the plate contact member 3 was listened. A polyester film having a thickness of 100 µ, a width of 40 mm and a length of 420 mm, which was prepared by a biaxial stretching method was used as the plate contact member.

In addition, a contact angle of the plate contact member was 45°, i.e., the angle B shown in Fig. 3 was 45°. The roll having the nickel belt on was rotated at a speed of from 25 to 35 rpm.

This operation was performed repeatedly on each of the 10 nickel belts and the results are shown in Table 2.

The belts 1 and 4 emitted a sound, and the belt 7 emitted two sounds.

An optical microscope found that the belt 1 had a convexity having a height of about 35µm and a diameter of about 50 µm, and that the belt 4 had a convexity having a height of about 45 µm and a diameter of about 60 µm. In addition, the microscope found that the belt 7 had a convexity having a height of about 35 µm and a diameter of about 40 µm and a convexity having a height of about 25 µm and a diameter of about 50 µm at an interval of about 12 mm therebetween.

The other belts emitted only a normal friction sound and did not emit an apparent sound due to a convexity.

As a result, it was determined that the belt 1 and 4 had a convexity each, the belt 7 had 2 convexities and the other belts did not have a convexity.

### Example 2

This is an example of detecting a convexity by a peak hold process on a signal detected by a plate contact member with a sensor.

Each of the above-mentioned 10 nickel belts was set in the apparatus shown in Fig. 5, and the roll having the nickel belt on was rotated while the plate contact member 3 was contacted to the nickel belt and a vibration generated on the plate contact member 3 was detected by a vibration sensor using a piezoelectric device.

The signal processing flow shown in Fig. 9 was used for a signal process. A polyester film having a thickness of 100 µ, a width of 40 mm and a length of 420 mm, which was prepared by a biaxial stretching method was used as the plate contact member.

In addition, a contact angle of the plate contact member was 45°, i.e., the angle B shown in Fig. 3 was 45°. The thus evaluated results are shown in Table 2.

Each one detection of a convexity was performed on the belts 1, 4 and 9 and 2 detections of a convexity were performed on the belt 7.

A signal of the convexity detected from the belt 9 was smaller than those of belts 1 and 4. An optical microscope found that the convexity of the belt 9 had a height of 25 µm and a diameter of 30 µm, and was smaller than those of the belts 1 and 4.

In addition, the convexity detected from each belt 1, 4 and 7 was the same convexity detected in Example 1.

As a result, it was determined that the belts 1, 4 and 9 had a convexity each, the belt 7 had 2 convexities and the other belts had no convexity.

### Example 3

This is an example of detecting a convexity by comparing a frequency distribution computed from a signal detected from a plate contact member with a sensor with a threshold.

Each of the above-mentioned 10 nickel belts was set in the apparatus shown in Fig. 5, and the roll having the nickel belt on was rotated while the plate contact member 3 was contacted to the nickel belt and a vibration generated on the plate contact member 3 was detected by a vibration sensor using a piezoelectric device.

A polyester film having a thickness of 100 m, a width of 40 mm and a length of 420 mm, which was prepared by a biaxial stretching method was used as the plate contact member 3.

In addition, a contact angle of the plate contact member was 30°, i.e., the angle B shown in Fig. 3 was 30°.

The signal processing flow shown in Fig. 10 was used for a signal process and the Fourier transform was performed to determine a frequency distribution. The thus evaluated results are shown in Table 2.

Each one detection of a convexity was performed on the belts 1, 4 and 9 and 2 detections of a convexity were performed on the belt 7.

A signal of the convexity detected from the belt 9 was smaller than those of belts 1 and 4.

In addition, the convexity detected from each belt 1, 4, 7 and 9 was the same convexity detected in Example 2.

As a result, it was determined that the belts 1, 4 and 9 had a convexity each, the belt 7 had 2 convexities and the other belts had no convexity.

### Example 4

This is an example of detecting a convexity using a short-time Fourier transform as a multiple resolution analysis.

Each of the above-mentioned 10 nickel belts was set in the apparatus shown in Fig. 4, and the roll having the nickel belt on was rotated while the plate contact member 3 was contacted to the nickel belt and a vibration generated on the plate contact member 3 was detected by a vibration sensor using a piezoelectric device.

The signal processing flow shown in Fig. 11 was used for a signal process and the short-time high speed Fourier transform was performed. The short-time high speed Fourier transform is a combined method of a Fourier transform and a high-speed Fourier transform, and performs a same result as that of a normal short-time Fourier transform.

A polyester film having a thickness of 100 m, a width of 40 mm and a length of 420 mm, which was prepared by a biaxial stretching method was used as the plate contact member 3.

In addition, a contact angle of the plate contact member was 45°, i.e., the angle B shown in Fig. 3 was 45°.

The thus evaluated results are shown in Table 2.

Each one detection of a convexity was performed on the belts 1, 4 and 9 and 2 detections of a convexity were performed on the belt 7.

A signal of the convexity detected from the belt 9 was smaller than those of belts 1 and 4.

In addition, the convexity detected from each belt 1, 4, 7 and 9 was the same convexity detected in Example 2.

As a result, it was determined that the belts 1, 4 and 9 had a convexity each, the belt 7 had 2 convexities and the other belts had no convexity.

### Example 5

This is an example of detecting a convexity using a wavelet transform as a multiple resolution analysis.

Each of the above-mentioned 10 nickel belts was set in the apparatus shown in Fig. 4, and the roll having the nickel belt on was rotated while the plate contact member 3 was contacted to the nickel belt and a vibration generated on the plate contact member 3 was detected by an electret condenser microphone from Sony Corp.

The signal processing flow shown in Fig. 12 was used for a signal process and the wavelet transform was performed. The 8th Daubechies function was used as a wavelet function for the wavelet transform.

A polyester film having a thickness of 100 m, a width of 40 mm and a length of 420 mm, which was prepared by a biaxial stretching method was used as the plate contact member 3.

In addition, a contact angle of the plate contact member was 30°, i.e., the angle B shown in Fig. 3 was 30°.

The inspection results of the 10 belt-shapes are shown in Table 2.

Each one detection of a convexity was performed on the belts 1, 3, 4 and 9 and 2 detections of a convexity were performed on the belt 7.

Signals of the convexity detected from the belts 3 and 9 were smaller than those of belts 1 and 4.

An optical microscope found that the convexity of the belt 3 had a moderate form having a height of 40 µm and a diameter of 150 µm.

In addition, the convexity detected from each belt 1, 4, 7 and 9 was the same convexity detected in Example 2.

As a result, it was determined that the belts 1, 3, 4 and 9 had a convexity each, the belt 7 had 2 convexities and the other belts had no convexity.

In this example, a convexity having a moderate form was found on the belt 3 for the first time. This is because the wavelet transform capable of detecting a signal from the moderate convexity of the belt 3.

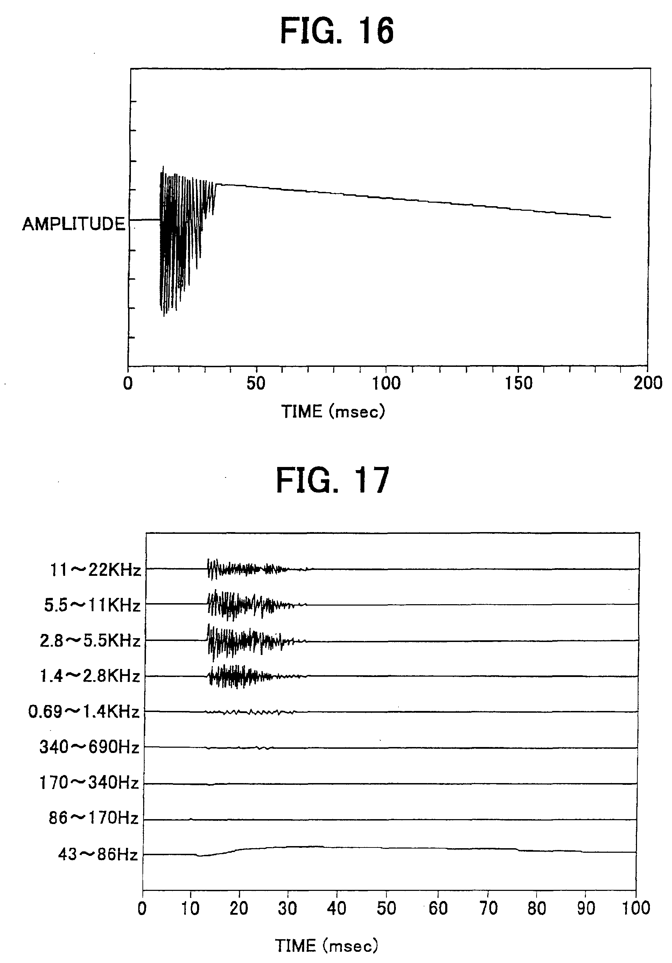

Further, the procedures of evaluation of the nickel belts in Examples 1 to 5 were repeated except that the contact angle of the plate contact member was changed from 30° to 45° and 80° to find that the belts 1, 3, 4, 7 and 9 had a convexity and that the detection capability did not largely change when the contact angle of the plate contact member was from 30° to 80°. In the examples of the present invention, an example of a signal detected by the microphone when the belt-shape was inspected is shown in Fig. 16. A result of a wavelet transform on the signal is shown in Fig. 17.

In order to see a variation status of a signal before a convexity is detected, a signal variation about 12 msec before a convexity is detected is shown In Figs. 16 and 17.

An original detected signal shown in Fig. 16 has a large amplitude after a convexity is detected and a base line largely declines later. A result of a multiple resolution analysis performed on the signal is shown in Fig. 17, in which the original signal is divided into 9 frequencies and temporal responses thereof are shown.

In Fig. 17, presence of vibrations are identified in four frequencies, i.e., of from 11 to 22 KHz, from 5.5 to 11 KHz, from 2.8 to 5.5 KHz and from 1.4 to 2.8 KHz. In addition, a presence of vibration is also identified in a low frequency of from 43 to 86 Hz. However, a presence of a strong vibration is not identified between 86 Hz and 1400 Hz. In this manner, a tendency of a frequency distribution can be known without losing time information of a signal obtained from a sensor by the multiple resolution analysis.

Therefore, in detection and evaluation of a convexity, when a controversial frequency range is revealed before detection and the multiple resolution analysis is performed on a signal of a vibration from a sensor to evaluate the controversial frequency, the evaluation can accurately be performed.

For example, it is difficult to make a decision to pass or fail only from the result shown in Fig. 16, however, when the multiple resolution analysis is performed on this to obtain the result shown in Fig. 17 and it is determined based only on a frequency range not less than 1.4 KHz, a more precise decision can be made because affects of the low frequencies in Fig. 16 are removed.

A moderate ground swell can be accurately detected when a pressure variation sensor is used and the multiple resolution analysis is performed on a signal therefrom as shown in Fig. 17 to make a decision based on a change of signal in a low frequency range.

### Example 6

This is an example of detecting a convexity by performing a bandpass filter process as a multiple resolution analysis.

Each of the above-mentioned 10 nickel belts was set in the apparatus shown in Fig. 3 so as to be supported by a roll inside, and the roll having the nickel belt on was rotated while the plate contact member 3 was contacted to the nickel belt and a vibration generated on the plate contact member 3 was detected by an electret condenser microphone from Sony Corp.

The signal processing flow shown in Fig. 13 was used for a signal process and the multiple resolution analysis with a bandpass filter was performed.

A polyester film having a thickness of 100 m, a width of 40 mm and a length of 420 mm, which was prepared by a biaxial stretching method was used as the plate contact member 3.

In addition, a contact angle of the plate contact member was 45°, i.e., the angle B shown in Fig. 3 was 45°.

The thus evaluated results are shown in Table 2.

Each one detection of a convexity was performed on the belts 1, 3, 4 and 9 and 2 detections of a convexity were performed on the belt 7. The convexity detected from each belt 1, 4, 7 and 9 was the same convexity detected in Example 5.

### Example 7

This is an example of detecting a convexity using a Wigner distribution as a multiple resolution analysis.

Each of the above-mentioned 10 nickel belts was set in the apparatus shown in Fig. 3, and the roll having the nickel belt on was rotated while the plate contact member 3 was contacted to the nickel belt and a vibration generated on the plate contact member 3 was detected by an electret condenser microphone from Sony Corp.

The signal processing flow shown in Fig. 14 was used for a signal process and the Wigner distribution was determined.

A polyester film having a thickness of 100 m, a width of 40 mm and a length of 420 mm, which was prepared by a biaxial stretching method was used as the plate contact member 3.

In addition, a contact angle of the plate contact member was 45°, i.e., the angle B shown in Fig. 3 was 45°.

The thus evaluated results are shown in Table 2.

Each one detection of a convexity was performed on the belts 1, 3, 4 and 9 and 2 detections of a convexity were performed on the belt 7.

Results of the Wigner distribution of the belts 3 and 9 was lower than those of the belts 1 and 4, and the convexities of the belts 3 and 9 were supposed to smaller than those of the belts 1 and 4.

The convexity detected from each belt 1, 4, 7 and 9 was the same convexity detected in Example 5.

### Comparative Example 1

This is an example of detecting a convexity by touching with a hand conventionally used.

A nickel belt was set in the apparatus shown in Fig. 1, and the hinge 4 was rotated such that the plate contact member 3 did not contact the belt.

Next, a polyethylene globe was put on a hand, and further a polyester fiber glove for a clean room was put thereon to check whether there was a protrusion on a surface of the belt while the roll 1 was rotated. The thus evaluated results are shown in Table 2.

A convexity on the belts 4 and 7 each was detected. However, the convexity of the belt 1 commonly detected in Examples 1 to 7 and the convexity detected on the belts 3 and 9 could not be detected.

It was found that the polyethylene globe and polyester fiber glove put an a hand were not suitable for detecting a microscopic convexity.

In this method, it can be considered that only the polyester fiber glove is used, but a fat of a hand occasionally adheres to a surface of a subject, which causes a defect of the subject.

In addition, only the polyethylene globe is not suitable for detecting a microscopic convexity because of its roughness. It can be considered that a thin rubber glove is used, but a friction coefficient between the rubber glove and a subject is so large that it is difficult to frictionize a surface of the subject by a hand with the glove.

### Comparative Example 2

This is an example of detecting a convexity by a conventional method using a laser beam.

A nickel belt was set in the apparatus shown in Fig. 1, and the hinge 4 was rotated such that the plate contact member 3 did not contact the belt. Next, a laser beam was irradiated to the belt to check the scattered light. The laser beam had a wavelength of 780 .m and a spot diameter of 60 m. The thus evaluated results are shown in Table 2.

A convexity on the belts 1, 4 and 8 each was detected. Two convexities on the belt 7 were detected. The convexity detected on the belt 1 was the same convexity detected in Examples 1 to 7.

However, the convexity detected on the belt 4 had a different location from that of the convexity detected in Examples 1 to 7.

The convexity was further investigated to find that it was an amorphous dust having a size of about 20 µm.

In addition, the convexity of the belt 8 was not detected in Examples 1 to 7, and the convexity was further investigated to find that it was a fibriform material having a diameter of about 10 µm and a length of 70 µm.

Therefore, it was found that this method not only had insufficient detection capability but also misidentified a dust adhered on a surface of a subject as a convexity.

### Comparative Example 3

This is an example of detecting a convexity by contacting another roller to a surface of a subject as disclosed in Japanese Laid-Open Patent Publication No. 2000-214100.

A nickel belt was set in an apparatus equipped with the roller having an outside diameter of 15 mm and a width of 420 mm. The thus evaluated results are shown in Table 2.

A convexity on the belts 2, 7 and 8 each was detected. The convexity detected on the belt 1 was the same convexity detected in Examples 1 to 7.

However, 2 convexities were detected on the belt 7 in Examples 1 to 7, but the only 1 convexity was detected in this Comparative Example. This is because the 2 convexities were present closely to each other and the roller identified them as 1 convexity.

In addition, the convexity on the belt 8 was not detected in Example 1 to 8, but it was detected in this comparative Example. The convexity was further investigated to find that it was a fibriform material having a diameter of about 10 µm and a length of 70 µm.

Therefore, it was found that this method not only had insufficient detection capability but also misidentified a dust adhered on a surface of a subject as a convexity.

### Preparation for photoreceptors

Next, an electrophotographic photoreceptor having a substrate formed from each of the above-mentioned 10 nickel belts was prepared by the following method.

### 1. Formation of an undercoat layer

A resin coating material (liquid) including the following components was coated on the nickel belt by a dip coating method, and the coated belt was heated at 150 for 15 min such that the coated material was hardened with the heat to form an undercoat layer having a thickness of 5 m on a surface of the substrate.

| | |
|---|---|
| Titanium oxide | 20 parts by weight |
| Alkyd resin | 10 parts by weight |
| Melamine resin | 10 parts by weight |
| Methyl ethyl ketone | 60 parts by weight |

The alkyd resin was Bekkosol 1307-60-EL from Dainippon Ink & Chemicals, Inc. and the melamine resin was Super Bekkamin G-821-60 from Dainippon Ink & Chemicals, Inc.

### 2. Formation of a charge generation layer

A resin coating material (liquid) including the following components was coated on the undercoat layer by the same dip coating method, and heated at 100 . for 10 min to form a charge generation layer on the undercoat layer.

| | |
|---|---|
| Butyral resin | 1 part by weight |
| Disazo pigment | 9 parts by weight |

having the following formula (1):

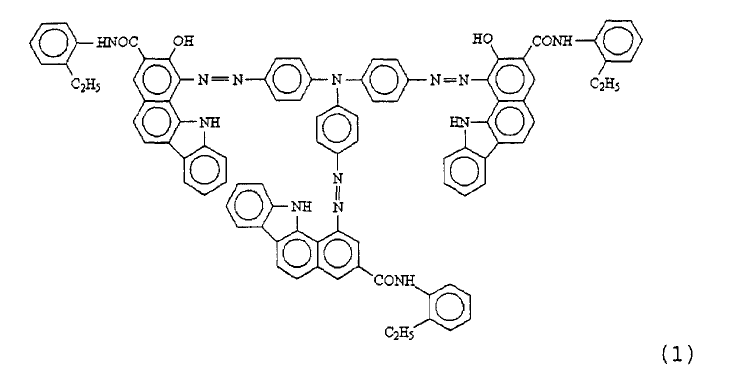

| | |
|---|---|
| Cyclohexane | 30 parts by weight |
| Tetrahydrofuran (THF) | 30 parts by weight |

The butyral resin was XYHL from Union Carbide Corp.

### 3. Formation of a charge transport layer

Further, a resin coating material (liquid) including the following components was coated on the charge generation layer by the same dip coating method, and heated at 120 . for 15 min to form a charge transport layer on the charge generation layer.

| | |
|---|---|
| Polycarbonate resin | 10 parts by weight |
| Charge transport material | 10 parts by weight |

having the following formula (2):

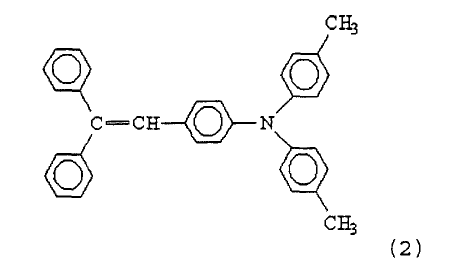

| | |
|---|---|
| Dichloromethane | 80 parts by weight |

The polycarbonate was Panlite K-1300 from Teijin Ltd.

Thus, an electrophotographic photoreceptor having a substrate formed from each of the above-mentioned 10 nickel belts was prepared. The photoreceptors were sequentially numbered, e.g., the photoreceptor formed from the belt 1 was numbered as a photoreceptor 1 and the photoreceptor formed from the belt 2 was numbered as a photoreceptor 2.

### Image evaluation

The thus prepared 10 electrophotographic photoreceptors were installed in a full-color laser printer from Ricoh Company, Ltd. and images were produced to evaluate quality of the images.

The laser printer has a laser beam wavelength of 780 nm, a beam diameter of 76 m and an image resolution of 600 dpi. Half tone images were produced by the laser printer to check whether there was a defect in the images. The image evaluation results are shown in Table 1.

**Table 1**

| Photoreceptor No. | Image Evaluation Results |
|---|---|
| Photoreceptor 1 | There was a faint irregular color defect, the position of which conformed to a position of a protrusion on the nickel belt |
| Photoreceptor 2 | Good |
| Photoreceptor 3 | Good |
| Photoreceptor 4 | There was a irregular color defect, the position of which conformed to a position of a protrusion on the nickel belt |
| Photoreceptor 5 | Good |
| Photoreceptor 6 | Good |
| Photoreceptor 7 | There was a faint irregular color defect, the position of which conformed to a position of a protrusion on the nickel belt |
| Photoreceptor 8 | Good |
| Photoreceptor 9 | There was quite a faint irregular color defect, the position of which conformed to a position of a protrusion on the nickel belt |
| Photoreceptor 10 | Good |

**Table 2**

| | Evaluation Results of Nickel Belt |
|---|---|
| Example 1 | A protrusion was detected on the belts 1, 4 and 7 |
| Example 2 | A protrusion was detected on the belts 1, 4, 7 and 9 |
| Example 3 | A protrusion was detected on the belts 1, 4, 7 and 9 |
| Example 4 | A protrusion was detected on the belts 1, 4, 7 and 9 |
| Example 5 | A protrusion was detected on the belts 1, 3, 4, 7 and 9 |
| Example 6 | A protrusion was detected on the belts 1, 3, 4, 7 and 9 |
| Example 7 | A protrusion was detected on the belts 1, 3, 4, 7 and 9 |
| Comparative Example 1 | A protrusion was detected on the belts 4 and 7 |
| Comparative Example 2 | A protrusion was detected on the belts 1, 4, 7 and 8 |
| Comparative Example 3 | A protrusion was detected on the belt 2, 7 and 8 |

In Example 1, a convexity could be detected on the belts 1, 4 and 7. These convexities were relatively large protrusions having a diameter of from 30 to 50 µ and a height of from 30 to 50 µ.

In Examples 2 to 4, a convexity could be detected on the belts 1, 4, 7 and 9. These convexities were very small protrusions having a diameter of about 5 µ and a height of about 8 µ.

In Examples 5 to 7, a convexity could be detected on the belts 1, 3, 4, 7 and 9.

The convexity of the belt 3 was a protrusion like a moderate ground swell having a diameter of about 50 µ and a height of about 5 µ.

In Comparative Example 1, a convexity on the belts 4 and 7 could be detected, but a convexity on the belts 1, 3 and 9 could not be detected.

In Comparative Example 2, a convexity was detected on the belts 1, 4, 7 and 8, but a dust adhered onto the belt 8 was mistaken for a convexity. In addition, a small convexity of the belt 9 could not be detected.

In Comparative Example 3, a convexity could be detected on the belts 3 and 7, but a dust adhered onto the belts 2 and 8 was mistaken for a convexity. In addition, a convexity of the belts 1, 3, 4 and 9 could not be detected.

Thus, an effect of the present invention could be recognized.

This document claims priority and contains subject matter related to Japanese Patent Applications Nos. 2001-284928 and 2001-314849, filed on September 19, 2001 and October 12, 2001 respectively, incorporated herein by reference.

Having now fully described the invention, it will be apparent to one of ordinary skill in the art that many changes and modifications can be made thereto without departing from the spirit and scope of the invention as set forth therein.

## Claims

1. A method for detecting a convexity present on a surface of a member, in particular selected from the group consisting of belt-shaped members and roll-shaped members, comprising:
contacting a surface of the member with a contact member; and
detecting at least one of a vibration generated on the contact member and a change of pressure applied thereto to detect the convexity on the surface of the member.

2. The method of Claim 1, wherein the member is a belt-shaped member, and wherein thecontacting step comprises:
contacting the surface of the member with the contact member while sandwiching the member with the contact member and a rotating roller.

3. The method of Claim 1, wherein the member is a roll-shaped member, and wherein the contacting step comprises:
contacting the surface of the member with the contact member while rotating the member.

4. The method of any one of Claims 1 to 3, wherein the contacting step comprises:
contacting the surface the member with the contact member at an angle of from 30 to 80°.

5. The method of any one of Claims 1 to 4, wherein the contacting step comprises:
contacting the surface of the member with the contact member at a relative speed from 5 to 100 mm/sec.

6. The method of any one of Claims 1 to 5, wherein the contacting step comprises:
contacting the surface of the member with the contact member at a pressure from 0.00075 to 0.0025 N at a width of 1 cm of a contacting portion thereof.

7. The method of any one of Claims 1 to 6, wherein the detecting step comprises:
detecting the vibration with a sound emitted from thecontact member and the member.

8. The method of any one of Claims 1 to 7, wherein detecting step comprises:
detecting at least one of the vibration and the change of pressure with a sensor provided on thecontact member.

9. The method of Claim 8, further comprising:
converting at least one of the vibration and the change of pressure into an electrical signal with the sensor;
subjecting the signal to a peak hold process to determine a maximum strength thereof; and
comparing the maximum strength with a threshold.

10. The method of Claim 9, further comprising:
processing the electrical signal to determine a frequency distribution thereof; and
comparing the frequency distribution with a threshold.

11. The method of Claim 8, further comprising:
converting at least one of the vibration and the change of pressure into a digital signal;
subjecting the digital signal to a multiple resolution analysis to determine a value; and
comparing the value with a threshold.

12. The method of Claim 11, wherein the subjecting step comprises:
subjecting the digital signal to the multiple resolution analysis with a method selected from the group consisting of short-time Fourier transforms, wavelet transforms, methods of determining a Wigner distribution and methods using a bandpass filter.

13. The method of Claim 8, wherein the contacting step comprises:
first contacting the surface of the member while relatively moving the contact member in a first direction to detect at least one of a first vibration and a first change of pressure;
then secondly contacting the surface of the member while relatively moving the contact member in a second direction opposite to the first direction to detect at least one of a second vibration and a second change of pressure; and
optionally repeating the first contacting and the second contacting to obtain plural signals from the sensor, and wherein the detecting step comprises:
detecting at least one of the vibration and the change of pressure by analyzing the plural signals.

14. The method of Claim 13, plural sensors are provided in different positions of the contact member, and wherein the detecting step comprises:
detecting at least one of a difference in detection time and a difference in strength of plural signals detected by the plural sensors; and
processing the plural signals to determine at least one of a position and a size of the convexity.

15. The method of any one of Claims 1 to 14, wherein the member is a belt-shaped metallic member produced by an electroforming method.

16. A method of producing a member selected from the group consisting of belt-shaped members and roll-shaped members, comprising:
detecting a convexity of the member with the method according to any one of Claims 1 to 15; and
determining whether the member is out of a predetermined standard depending on the convexity.

17. A detection apparatus comprising:
a contact member;
a driving device configured to move a surface of a member, in particular selected from the group consisting of belt-shaped members and roll-shaped members relative to the contact member and in contact with the contact member; and
a detector which is configured to detect at least one of a vibration generated on the contact member due to the contact and a change of pressure applied thereto due to the contact in order to detect a convexity or unevenness present on the surface of the member.

18. The detection apparatus of Claim 17, wherein the contact member comprises a sensor configured to detect and convert at least one of the vibration and the change of pressure into an electrical signal.

19. The detection apparatus of Claim 18, further comprising:
a peak hold device configured to perform a peak hold process on the electrical signal to determine a maximum strength thereof; and
a comparator configured to compare the maximum strength with a threshold.

20. The detection apparatus of Claim 18, further comprising:
a analysator mechanism configured to perform a multiple resolution analysis on the electrical signal to determine a value; and
a comparator configured to compare the value with a threshold.

21. The detection apparatus of any one of Claims 17 to 20, wherein the contact member comprises a contact portion having a Rockwell hardness of from 65 to 140 when measured based on JIS K 7202.

22. A production system producing a member selected from the group consisting of belt-shaped members and roll-shaped members, or a detection system comprising the detection apparatus according to any one of Claims 17 to 21 and/or comprising a controller which controls performing the method steps of one of claims 1 to 16 and/or the plate contact member of claim 27.

23. The production system of Claim 22, further comprising a display.

24. The production system of Claim 23, wherein the display displays information whether a convexity is present on a surface of a member selected from the group consisting of the belt-shaped members and roll-shaped members.

25. The production system of Claim 23 or 24, wherein the display displays at least one of a location and a size of the convexity.

26. The production system of any one of Claims 23 to 25 , wherein the display displays a comparison result of the convexity with a threshold.

27. A plate contact member comprising a sensor, wherein the sensor detects at least one of a vibration generated on the plate contact member and a change of pressure applied thereto.
